# EUROPÄISCHE PATENTSCHRIFT

(11) **EP 3 583 488 B1**
(45) Veröffentlichungstag und Bekanntmachung des Hinweises auf die Patenterteilung: **27.12.2023**
(21) Anmeldenummer: 18704969.7
(22) Anmeldetag: 12.02.2018
(51) Int. Cl.: B60K 35/00, B60K 37/06, B60R 1/00, G06F 3/01

(54) **AUTOMATISIERTE AKTIVIERUNG EINES SICHTUNTERSTÜTZUNGSSYSTEMS**
AUTOMATED ACTIVATION OF A VISION SUPPORT SYSTEM
ACTIVATION AUTOMATISÉE D'UN SYSTÈME D'ASSISTANCE VISUELLE

(30) Priorität: 15.02.2017 DE 102017202380
(43) Veröffentlichungstag der Anmeldung: 25.12.2019
(73) Patentinhaber: Bayerische Motoren Werke Aktiengesellschaft, 80809 München (DE)
(72) Erfinder: SCHWARZ, Felix, 80333 München (DE)
(86) Internationale Anmeldenummer: PCT/EP2018/053379
(87) Internationale Veröffentlichungsnummer: WO 2018/149768

(56) Entgegenhaltungen:
- EP-A2- 2 607 171
- WO-A1-2015/062750
- DE-A1-102012 024 962
- US-A1- 2014 336 876
- US-A1- 2015 022 664
- US-A1- 2015 160 735

## Beschreibung

Die vorliegende Erfindung betrifft ein Verfahren zur Aktivierung eines Sichtunterstützungssystems für ein Fahrzeug sowie ein solches Sichtunterstützungssystem.

Die Erfindung ist geeignet für den Einsatz in Fahrzeugen aller Art, insbesondere in Kraftfahrzeugen und besonders bevorzugt in Personen- und Lastkraftwagen. Wenn die Erfindung nachfolgend mit Bezug zu solchen Fahrzeugen beschrieben wird, so ist dies nicht einschränkend zu verstehen, sondern lediglich einer besser verständlichen Darstellung der Erfindung geschuldet.

Moderne Kraftfahrzeuge verfügen über zahlreiche den Fahrzeugführer ("Fahrer") bei seinen Fahraufgaben unterstützenden Assistenzsystemen. Hierzu zählen Sichtunterstützungssysteme, die den Fahrer bei der Einsichtnahme der Fahrzeugumgebung unterstützen. Derartige Sichtunterstützungssysteme können beispielsweise verdeckte oder aus anderen Gründen für den Fahrer nicht oder schlecht einsehbare Bereiche anzeigen. So kann beispielsweise ein rückwärtiger Fahrzeugbereich mittels eines Rückfahrkamera auf einem Display angezeigt werden. Ebenso sind unter der Bezeichnung "Side View" Systeme bekannt, die eine Darstellung der seitlich des Fahrzeugs liegenden Bereiche liefern. Ferner können Sichtunterstützungssysteme virtuelle Ansichten der Fahrzeugumgebung darstellen. Beispielsweise sind unter den Bezeichnungen "Top View" und "Surround View" Systeme bekannt, die eine virtuelle Darstellung des Fahrzeugs aus der Vogelperspektive erzeugen und anzeigen. Weitere Sichtunterstützungssysteme verbessern die Sicht des Fahrers, indem sie die Sichtbarkeit von Objekten verbessern. Ein Beispiel für ein derartiges Sichtunterstützungssystem ist unter der Bezeichnung "Night Vision" bekannt. Hierbei erkennt das Sichtunterstützungssystem Personen oder auch größere Tiere im Dunkeln und leuchtet sie gezielt an, sodass sie für den Fahrer besser erkennbar sind.

DE 10 2008 059 269 A1 beschreibt ein Verfahren zur Verbesserung der Rundumsicht bei einem Fahrzeug, wobei mit mindestens einer am Fahrzeug angebrachten Kamera ein Bild eines Winkelbereichs der Umgebung erzeugt und auf einer Bildanzeigeeinrichtung im Blickfeld des Fahrers angezeigt wird, wobei in Abhängigkeit von einer Kopfposition des Fahrers ein Ausschnitt des Kamerabildes als Anzeigeinhalt extrahiert und angezeigt wird. Dadurch soll eine naturgetreue und zur bestehenden Rundumsicht aus dem Fahrzeug synchrone Visualisierung der durch die Dachträgersäulen entstehenden "toten Winkel" ermöglicht werden.

Es ist in der Regel nicht gewünscht, dass ein Sichtunterstützungssystem andauernd in Betrieb ist, damit der Fahrer nicht mit nicht benötigten Darstellungen behelligt wird. Es ist bekannt, Bedienelemente zur manuellen Aktivierung oder Deaktivierung eines Sichtunterstützungssystems vorzusehen. Dies verlangt vom Fahrer jedoch eine gesonderte Bedienhandlung, was dieser - insbesondere während der Bewältigung einer komplexen Fahraufgabe - als lästig empfinden kann. Ferner ist bekannt, ein Sichtunterstützungssystem automatisiert in Abhängigkeit vorbestimmter Fahrzeugzustände zu aktivieren oder zu deaktivieren. Beispielsweise kann ein gegen die Fahrzeugvorzugsrichtung gewandtes Sichtunterstützungssystem (z.B. eine Rückfahrkamera) automatisch aktiviert werden, wenn der Fahrer den Rückwärtsgang einlegt und automatisch deaktiviert werden, sobald das Fahrzeug bei der Vorwärtsfahrt eine vorbestimmte Geschwindigkeit überschreitet. Auch bei einer solchen automatisierten Aktivierung des Sichtunterstützungssystems kann es jedoch vorkommen, dass das Sichtunterstützungssystem nicht aktiviert wird, obwohl sein Betrieb wünschenswert wäre (falsch-negativ), oder dass es aktiviert wird, obwohl es nicht benötigt wird (falsch-positiv).

DE 10 2012 024 962 A1 offenbart ein kameragestütztes Kraftfahrzeug-Außenrückspiegelsystem. Dabei ist vorgesehen, dass der Fahrer den angezeigten Bildausschnitt durch die Ausführung vorbestimmter Gesten einstellt.

Ein Sichtunterstützungssystem eines Kraftfahrzeugs offenbart auch US2014/0336876 A1. Dabei ist vorgesehen, dass eine Blickrichtung des Fahrers erfasst und ein in dieser Blickrichtung hinter einem undurchsichtigen Teil des Fahrzeugs befindlicher Bereich in einem Head-up-Display angezeigt wird. Ferner wird eine Gestensteuerung des angezeigten Bereichs derart vorgeschlagen, dass der Fahrer mit seiner Hand im Raum eine virtuelle Kugel bewegt.

Es besteht daher die Aufgabe, die automatische Aktivierung eines Sichtunterstützungssystems insbesondere im Hinblick auf die Vermeidung falschnegativer und falsch-positiver Aktivierung zu verbessern.

Die Aufgabe wird gelöst bei einem Verfahren und einem System mit den Merkmalen der unabhängigen Ansprüche. Vorteilhafte Weiterbildungen der Erfindung sind Gegenstände der abhängigen Ansprüche.

Bei dem erfindungsgemäßen Verfahren zur automatisierten Aktivierung eines Sichtunterstützungssystems eines Fahrzeugs, insbesondere eines Kraftfahrzeugs, sind die folgenden Schritte vorgesehen. In einem ersten Schritt wird eine durch eine Bewegung eines Kopfes und / oder Oberkörpers eines Fahrzeugnutzers, insbesondere eines Fahrzeugführers, gebildete Aktivierungsgeste erfasst. In einem zweiten Schritt wird ein von dem Fahrzeugnutzer gewünschter Sichtbereich anhand der erfassten Aktivierungsgeste bestimmt. Schließlich wird ein den gewünschten Sichtbereich abbildender Teil des Sichtunterstützungssystems aktiviert.

Das erfindungsgemäße Verfahren sieht also vor, dass die Aktivierung eines Sichtunterstützungssystems durch eine Aktivierungsgeste des Fahrzeugnutzers ausgelöst wird. Auf diese Weise wird der Fahrer von der Betätigung gesonderter Bedienelemente entlastet. Zugleich wird erreicht, dass das Sichtunterstützungssystem genau dann aktiviert wird, wenn es benötigt wird und wenn seine Aktivierung auch gewünscht ist. Indem die Aktivierungsgeste durch eine Bewegung des Kopfes und / oder Oberkörpers des Fahrzeugnutzers gebildet wird, sind eine Vielzahl verschiedener, gut voneinander unterscheidbarer Aktivierungsgesten möglich. Es hat sich gezeigt, dass derartige Aktivierungsgesten von Nutzern als intuitiv und leicht erlernbar empfunden werden.

Die Erfassung der Aktivierungsgeste kann bevorzugt von einem (häufig ohnehin im Fahrzeug bereits für andere Zwecke vorhandenen) Innenraum-Bilderfassungssystem durchgeführt werden. Hierzu kann eine den Kopf und / oder Oberkörper des Fahrzeugnutzers erfassende Innenraumkamera und ein von der Kamera erfasste Bilder auswertendes Steuergerät genutzt werden.

Eine vorteilhafte Weiterbildung der Erfindung sieht vor, dass die die Aktivierungsgeste bildende Bewegung im Wesentlichen einer Bewegung des Kopfes und / oder Oberkörpers des Fahrzeugnutzers entspricht, welche zur nicht durch das Sichtunterstützungssystem unterstützten Einsichtnahme des gewünschten Sichtbereichs geeignet ist. Mit anderen Worten wird also die Aktivierungsgeste durch diejenige Bewegung gebildet, die ein Fahrer ausführen würde, um den gewünschten Sichtbereich ohne Hilfsmittel einzusehen. Eine solche Bewegung kann eine Bewegung in Richtung des gewünschten Sichtbereichs umfassen. Eine solche Bewegung kann jedoch auch eine Bewegung umfassen, die ein Vorbeiblicken an einem den gewünschten Sichtbereich verdeckenden Objekt (z.B. einer A-Säule, eines Rückspiegels oder einer Dachkante eines Kraftfahrzeugs) ermöglicht. Diese Ausführungsform ist deswegen besonders vorteilhaft, weil sie eine völlig intuitive Anwendung des Verfahrens ermöglicht: Der Nutzer muss zur Aktivierung des Sichtunterstützungssystem nur das tun, was er zur Befriedigung seines Sichtwunsches ohnehin tun würde. Anders ausgedrückt kommt dem Nutzer das Sichtunterstützungssystem automatisch dann zur Unterstützung, wenn er durch eine entsprechende Bewegung zeigt, dass er dieser Unterstützung bedarf.

Alternativ oder zusätzlich kann bevorzugt vorgesehen sein, dass der Schritt des Bestimmens des von dem Fahrzeugnutzer gewünschten Sichtbereichs anhand der erfassten Aktivierungsgeste umfasst,
- dass ein Muster der die Aktivierungsgeste bildenden Bewegung des Kopfes und / oder Oberkörpers bestimmt wird,
- dass das Muster zu einem in einer Datenbank vorab gespeicherten Vergleichsmuster zugeordnet wird und
- dass ein dem Vergleichsmuster in der Datenbank zugeordneter Sichtbereich bestimmt wird.

Mit anderen Worten wird dabei also zunächst die erfasste Bewegung im Hinblick auf charakteristische Unterscheidungsmerkmale untersucht, sodass ein Muster der Aktivierungsgeste bestimmt wird. Hierzu können zahlreiche im Stand der Technik an sich bekannte Verfahren zur Mustererkennung genutzt werden. Anschließend wird dieses Muster zu einem in einer Datenbank vorab gespeicherten Vergleichsmuster zugeordnet. Die Inhalte der Datenbank können von einem Fahrzeughersteller fest vorgegeben sein. Ebenso ist denkbar, dass der Nutzer die Inhalte der Datenbank selbst erzeugt, indem er einen hierfür vorgesehenen Trainings- oder Lernmodus nutzt. Somit kann dem Nutzer ermöglicht werden, Aktivierungsgesten seiner Wahl zu definieren. Ebenso ist denkbar, dass das System lernfähig ist und somit die positive Erkennungsrate der Aktivierungsgesten verbessert werden kann. Für den Fall, dass das Muster der Aktivierungsgeste keinem Vergleichsmuster mit hinreichend guter Übereinstimmung zugeordnet werden kann, kann bevorzugt vorgesehen sein, dass eine Aktivierung des Sichtunterstützungssystems unterbleibt. Somit kann sichergestellt werden, dass nur solche Bewegungen eine Aktivierung auslösen, bei denen dies auch mit hinreichend großer Wahrscheinlichkeit gewollt ist.

Erfindungsgemäß umfasst der Schritt des Aktivierens des den gewünschten Sichtbereich abbildenden Teils des Sichtunterstützungssystems
- ein Aktivieren einer den gewünschten Sichtbereich zumindest teilweise erfassenden Bilderfassungseinheit und
- ein Anzeigen des von der Bilderfassungseinheit erfassten Bildes auf einer Anzeigeeinheit des Fahrzeugs.

Die Bilderfassungseinheit ist bevorzugt eine Fahrzeugkamera, die den gewünschten Sichtbereich zumindest ausschnittsweise erfasst. Es kann vorgesehen sein, dass von der Fahrzeugkamera zusätzlich erfasste Bereiche außerhalb des gewünschten Sichtbereichs abgeschnitten werden, sodass dem Nutzer nur der ihn interessierende Bereich angezeigt wird. Weiter bevorzugt können die Bilder mehrerer Fahrzeugkameras kombiniert werden.

Die Anzeigeeinheit kann
- ein Head-up-Display und / oder
- ein Display in einem Kombiinstrument und / oder
- ein Display in einer Mittelkonsole und / oder
- ein Display in einem Rückspiegel
des Fahrzeugs umfassen, wobei diese Aufzählung nicht abschließend zu verstehen ist. Das Bild des gewünschten Sichtbereichs kann bevorzugt auf mehr als einer Anzeigeeinheit angezeigt werden. Besonders bevorzugt wird das Bild des gewünschten Sichtbereichs auf derjenigen Anzeigeeinheit des Fahrzeugs angezeigt, die die geringste Änderung einer momentanen Blickrichtung des Fahrers erfordert. Mit anderen Worten kann diejenige Anzeigeeinheit genutzt werden, zu der (oder wenigstens in deren Nähe) der Fahrer ohnehin gerade blickt. Zur Erfassung der Blickrichtung kann eine Blickrichtungserfassungseinheit genutzt werden. Es ist jedoch auch möglich, aus der erfindungsgemäß ohnehin erfassten Bewegung des Kopfes und / oder Oberkörpers des Fahrzeugnutzers auf dessen Blickrichtung zu schließen.

Erfindungsgemäß erfolgt der Schritt des Aktivierens des den gewünschten Sichtbereich abbildenden Teils des Sichtunterstützungssystems in Abhängigkeit einer Zusatzbedingung, insbesondere eines Wertes eines Fahrzeugzustandsparameters. Hierdurch kann die Erkennungsgenauigkeit noch weiter verbessert werden. Der Fahrzeugzustandsparameter kann
- eine Momentangeschwindigkeit und / oder
- eine Fahrtrichtung und / oder einen eingelegten Getriebegang und / oder
- einen Lenkwinkel und / oder
- ein Belegungssignal eines Sitzbelegungserkennungssystems
umfassen, wobei diese Aufzählung nicht abschließend zu verstehen ist.

Nachfolgend werden weitere Ausführungsformen der Erfindung erläutert. Dazu sei angemerkt, dass die beschriebenen Merkmale der genannten Ausführungsformen nicht abschließend zu verstehen sind. Es kann also jede der Ausführungsformen vorteilhaft mit weiteren Merkmalen ergänzt werden. Ferner können Ausführungsformen mit besonderem Vorteil miteinander genutzt werden, schließen sich also keinesfalls wechselseitig aus.

### a) Side View

Bei dieser Ausführungsform wird die Aktivierungsgeste durch eine seitliche Drehung des Kopfes und eine nach vorne gerichtete Bewegung des Oberkörpers gebildet, wobei ein Drehwinkel des Kopfes kleiner ist als ein erster vorbestimmter Drehwinkel. Mit anderen Worten führt der Fahrer diejenige Bewegung aus, die zu einer Einsichtnahme des links oder rechts (je nach Drehrichtung des Kopfes) von dem Fahrzeug gelegenen Bereichs führt. Der erste vorbestimmte Drehwinkel beträgt bevorzugt 90 Grad. Diese Bewegung tritt typischerweise an Kreuzungen zweier Straßen oder an Ausfahrten auf, wo der Fahrer den durch Hindernisse (z.B. Bäume, Gebäude, Parkverkehr) schlecht einsehbaren Querverkehr beobachten möchte.

Bevorzugt wird im Ansprechen auf die beschriebene Bewegung ein Side-View-System aktiviert, also ein im vorderen Bereich des Fahrzeugs (z.B. am Bereich der Kotflügel) seitlich ausgerichtetes Sichtunterstützungssystem.

Bei einer der erfindungsgemäßen Varianten kann die Aktivierung des Sichtunterstützungssystems in Abhängigkeit der Zusatzbedingung erfolgen, dass eine Momentangeschwindigkeit unterhalb eines ersten vorbestimmten Schwellenwerts der Momentangeschwindigkeit liegt. Dieser vorbestimmte Schwellenwert kann insbesondere 5 km/h oder weniger betragen.

### b) Schulterblick

Bei dieser Ausführungsform wird die Aktivierungsgeste durch eine seitliche Drehung des Kopfes und / oder des Oberkörpers gebildet, wobei ein Drehwinkel des Kopfes größer ist als ein zweiter vorbestimmter Drehwinkel. Es sei darauf hingewiesen, dass bei der Umsetzung dieser Ausführungsform eine Bestimmung des (resultierenden) Drehwinkels des Kopfes ausreichend ist, der Drehwinkel des Oberkörpers also nicht gesondert bestimmt werden muss. Der (resultierende) Drehwinkel des Kopfes wird nämlich durch die Drehung von Kopf und Oberkörper gebildet, da durch die Drehung des Oberkörpers auch der Kopf gedreht wird. Wird also beispielsweise der Oberkörper um 30 Grad gegenüber der Körperlängsachse oder der Fahrzeuglängsachse und der Kopf um 60 Grad gegenüber dem Oberkörper gedreht, so ergibt sich ein (resultierender) Drehwinkel des Kopfes von 90 Grad.

Bevorzugt beträgt der zweite vorbestimmte Drehwinkel 90 Grad. Besonders bevorzugt sind der erste und der zweite vorbestimmte Drehwinkel gleich, was eine klare Unterscheidung der beiden zuletzt beschriebenen Aktivierungsgesten erleichtert. Diese auch als "Schulterblick" bezeichnete Bewegung tritt typischerweise auf, wenn ein Abbiegevorgang oder ein Spurwechsel beabsichtigt ist. Der Schulterblick findet also insbesondere Anwendung beim Abbiegen an Kreuzungen, wobei auf einem Gehweg oder Radweg befindliche Verkehrsteilnehmer eingesehen werden sollen, sowie bei Überholvorgängen oder beim Anfahren aus einer Parkposition am Straßenrand, wobei auf der zu befahrenden Straßenspur befindliche Verkehrsteilnehmer eingesehen werden sollen.

Bevorzugt wird im Ansprechen auf die beschriebene Bewegung ein seitlich nach hinten gerichtetes Sichtüberwachungssystem aktiviert. Kann das seitlich nach hinten gerichtete Sichtüberwachungssystem nach Seiten getrennt aktiviert werden, so kann bevorzugt diejenige Seite aktiviert werden, zu der die seitliche Drehung des Kopfes und / oder des Oberkörpers gerichtet ist. Dreht also z.B. der Fahrer Kopf und Oberkörper nach links, so kann das Sichtüberwachungssystem einen linken rückwärtigen Bereich des Fahrzeugs visualisieren.

Bei einer der erfindungsgemäßen Varianten kann die Aktivierung des Sichtunterstützungssystems in Abhängigkeit der Zusatzbedingung erfolgen, dass ein Fahrtrichtungsanzeiger aktiv ist. Dies ist ein zusätzliches Indiz dafür, dass der Fahrer tatsächlich einen Abbiegevorgang oder Spurwechsel beabsichtigt. Besonders bevorzugt erfolgt die Aktivierung des Sichtunterstützungssystems in Abhängigkeit der Zusatzbedingung, dass eine Richtung des Fahrtrichtungsanzeiger und eine Richtung der seitlichen Drehung des Kopfes und / oder des Oberkörpers übereinstimmen.

### c) Insassenbeobachtung

Bei dieser Ausführungsform wird die Aktivierungsgeste durch eine Bewegung des Kopfes und / oder des Oberkörpers nach oben und in Richtung eines Rückspiegels gebildet. Diese Bewegung tritt typischerweise auf, wenn der Fahrer auf der Rückbank befindliche Insassen, insbesondere Kinder, im Rückspiegel beobachten will.

Bevorzugt wird im Ansprechen auf die beschriebene Bewegung ein auf die Rückbank gerichtetes Sichtüberwachungssystem aktiviert, welches beispielsweise eine Innenraumkamera eines Rear-Seat-Videochat-Systems umfassen kann.

Besonders bevorzugt ist die Anzeige des von der Innenraumkamera erfassten Bildes auf dem Rückspiegel, da der Fahrer das Bild genau dort erwartet. Hierzu kann das Fahrzeug über einen Spiegel verfügen, der entweder aus einem rein digitalen Display besteht oder zur kombinierten Anzeige digitaler Bildinhalte und optisch gespiegelter Bilder eingerichtet ist. Alternativ oder zusätzlich kann das von der Innenraumkamera erfasste Bild auf einem Head-up-Display angezeigt werden, damit der Fahrer seinen Blick wieder auf die Straße richten und dennoch die Insassen auf der Rückbank beobachten kann.

Bei einer der erfindungsgemäßen Varianten kann die Aktivierung des Sichtunterstützungssystems in Abhängigkeit der Zusatzbedingung erfolgen, dass ein positives Belegungssignal eines Sitzbelegungserkennungssystems des Fahrzeugs vorliegt. Hierbei kann es sich insbesondere um ein Signal handeln, dass sich auf der Rückbank ein Kind befindet (z.B. ausgelöst durch eine bestehende Befestigung eines Kindersitzes mittels Isofix).

### d) Ampelassistent

Bei dieser Ausführungsform wird die Aktivierungsgeste durch eine Bewegung des Kopfes und / oder des Oberkörpers nach unten und in Richtung einer Frontscheibe des Fahrzeugs gebildet. Diese Bewegung tritt typischerweise auf, wenn der Fahrer eine Lichtsignalanlage (ugs. "Ampel") einsehen möchte, die von dem Rückspiegel oder einer Dachkante des Fahrzeugs verdeckt wird.

Bevorzugt wird im Ansprechen auf die beschriebene Bewegung ein in Fahrzeugvorzugsrichtung gerichtetes Sichtüberwachungssystem aktiviert. Es kann vorgesehen sein, dass dazu eine Kamera das Bild der Ampel erfasst und dieses Bild angezeigt wird. Von der Erfindung umfasst ist jedoch auch die Möglichkeit, dass der Ampelstatus erfasst wird (z.B. optisch oder auch durch sog. Fahrzeug-zu-Infrastruktur-Kommunikation) und lediglich die erfasste wesentliche Information (z.B. die Signalfarbe der Ampel: grün, gelb oder rot) auf einem Fahrzeugdisplay wiedergegeben wird.

Bei einer der erfindungsgemäßen Varianten kann die Aktivierung des Sichtunterstützungssystems in Abhängigkeit der Zusatzbedingung erfolgen, dass eine Momentangeschwindigkeit unterhalb eines vorbestimmten zweiten Schwellenwerts der Momentangeschwindigkeit liegt. Dieser kann beispielsweise bei 5 km/h, bevorzugt 3 km/h, besonders bevorzugt 2 km/h liegen. Mit anderen Worten wird geprüft, ob sich das Fahrzeug im Wesentlichen oder vollständig im Stillstand befindet, was darauf hindeutet, dass das Fahrzeug an einer Ampel wartet.

### e) Kurvenfahrt

Bei dieser Ausführungsform wird die Aktivierungsgeste durch eine seitliche Bewegung des Kopfes und / oder des Oberkörpers gebildet. Eine derartige Bewegung kann auftreten, wenn der Fahrer bei einer Kurvenfahrt den weiteren Verlauf der Straße einsehen möchte, der durch die A-Säule des Fahrzeugs verdeckt wird.

Bevorzugt wird im Ansprechen auf die beschriebene Bewegung ein in Fahrzeugvorzugsrichtung gerichtetes Sichtüberwachungssystem aktiviert, also eine Frontkamera.

Bei einer der erfindungsgemäßen Varianten kann die Aktivierung des Sichtunterstützungssystems in Abhängigkeit der Zusatzbedingung erfolgen, dass ein Betrag eines Lenkwinkels oberhalb eines vorbestimmten ersten Schwellenwerts des Lenkwinkels liegt. Das Sichtunterstützungssystem wird dann also nur aktiviert, wenn tatsächlich eine Kurvenfahrt vorliegt.

Die Erfindung wird auch verwirklicht durch ein Sichtunterstützungssystem für ein Fahrzeug, insbesondere ein Kraftfahrzeug. Dieses umfasst eine Erfassungseinheit zur Erfassung einer durch eine Bewegung eines Kopfes und / oder Oberkörpers eines Fahrzeugnutzers, insbesondere eines Fahrzeugführers, gebildeten Aktivierungsgeste. Die Erfassungseinheit kann bevorzugt eine auf den Fahrer gerichtete Innenraumkamera umfassen.

Das Sichtunterstützungssystem umfasst ferner eine Bestimmungseinheit zur Bestimmung eines von dem Fahrzeugnutzer gewünschten Sichtbereichs anhand der erfassten Aktivierungsgeste. Die Bestimmungseinheit kann ein gesondertes Steuergerät des Fahrzeugs sein. Ebenso kann die Bestimmungseinheit Teil eines solchen Steuergeräts sein, das auch anderen Zwecken dient und insbesondere Teil eines oder mehrerer Fahrerassistenzsysteme ist.

Das Sichtunterstützungssystem umfasst ferner eine Bilderfassungseinheit zur zumindest teilweisen Erfassung des gewünschten Sichtbereichs. Die Bilderfassungseinheit kann insbesondere eine Fahrzeugkamera umfassen. Ebenso kann die Bilderfassungseinheit eine Infrarotkamera, einen Ultraschallsensor, einen Radarsensor und / oder einen Lidarsensor umfassen. Der Begriff der Bilderfassungseinheit ist insoweit breit auszulegen, als auch nicht-optische Systeme, welche zur mittelbaren bildlichen Erfassung des gewünschten Sichtbereichs geeignet sind, davon umfasst sein sollen. Beispielsweise kann eine Kommunikationsanlage des Fahrzeugs, welche zur Anforderung und / oder zum Empfang von Bilddaten mittels Fahrzeug-zu-Fahrzeug- oder Fahrzeug-zu-Infrastruktur-Kommunikation eingerichtet ist, einen Teil der Bilderfassungseinheit bilden.

Das Sichtunterstützungssystem umfasst ferner eine Anzeigeeinheit zur Anzeige des von der Bilderfassungseinheit erfassten Bildes. Die Anzeigeeinheit kann insbesondere
- ein Head-up-Display und / oder
- ein Display in einem Kombiinstrument und / oder
- ein Display in einer Mittelkonsole und / oder
- ein Display in einem Rückspiegel
des Fahrzeugs umfassen.

Weitere Ausführungsformen der Erfindung werden nachfolgend anhand beispielhafter Darstellungen erläutert. Dazu zeigen
Fig. 1 eine schematische Darstellung einer Ausführungsform der Erfindung und
Fig. 2 eine Ablaufdiagramm einer Ausführungsform des erfindungsgemäßen Verfahrens.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden. Weiterhin ist die Darstellung nicht unbedingt maßstabsgetreu. Einzelne dargestellte Merkmale können zu Zwecken der besseren Veranschaulichung vergrößert oder verkleinert dargestellt sein.

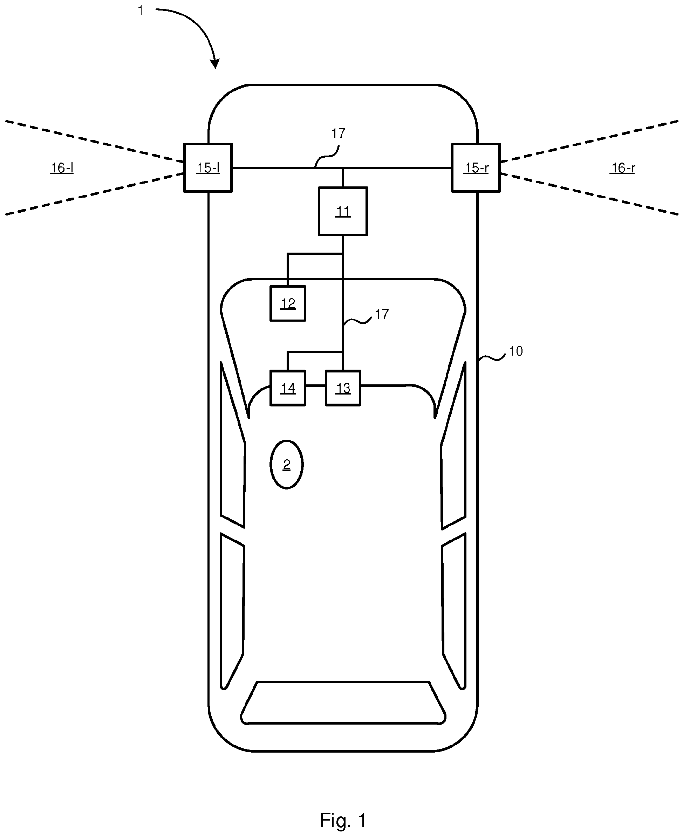

Fig. 1 zeigt eine schematische Draufsicht auf ein Kraftfahrzeug 10 mit einem Sichtunterstützungssystem 1. Eine Innenraumkamera 14 ist so in dem Fahrzeug 10 angeordnet, dass sie den Bereich des Kopfes und des Oberkörpers eines Fahrers 2 des Fahrzeugs 10 erfasst. Das Fahrzeug 10 verfügt über zwei Außenkameras 15-l, 15-r, welche jeweils links und rechts in den (nicht gesondert bezeichneten) Stoßfängern des Fahrzeugs 10 angeordnet sind. Die Kameras 15-l, 15-r erfassen jeweils einen Sichtbereich 16-l, 16-r seitlich des Fahrzeugs 10, dessen Grenzen in Fig. 1 durch gestrichelte Linien schematisch angedeutet sind. Ferner weist das Fahrzeug 10 ein Head-up-Display 12 und ein in einer Mittelkonsole angeordnetes Mittendisplay 13 auf. Die Innenraumkamera 14, die Außenkameras 15-l, 15-r sowie die Displays 12, 13 sind jeweils über ein Datenbussystem 17 mit einem Steuergerät 11 des Fahrzeugs 10 verbunden.

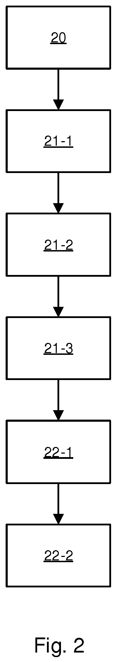

Mit Bezug zu Fig. 2 wird nun der Ablauf des Verfahrens anhand einer beispielhaften Verkehrssituation geschildert. Dabei befindet sich das Fahrzeug 10 auf einem Zufahrtsweg, welcher im rechten Winkel auf eine Straße mündet. Die Kreuzung des Weges mit der Straße ist aufgrund parkender Autos schlecht einsehbar.

Der Fahrer 2 des Fahrzeugs 10 fährt das Fahrzeug 10 vorsichtig bis an den Rand der Straße, wo es zunächst zum Stillstand kommt. Bevor der Fahrer 2 auf die Straße einbiegt, möchte er den Querverkehr einsehen. Hierzu beugt er seinen Oberkörper nach vorne und wendet den Kopf nach links, um von dort kommende Verkehrsteilnehmer sehen zu können.

Die Bewegungen des Kopfes und des Oberkörpers des Fahrers 2 werden von der Innenraumkamera 14 erfasst. Die erfassten Bilddaten werden fortlaufend über den Datenbus 17 an das Steuergerät 11 übertragen und dort ausgewertet. In Schritt 20 wird auf diese Weise die durch die Bewegung des Kopfes und des Oberkörpers gebildete Aktivierungsgeste erfasst.

In Schritt 21-1 wertet das Steuergerät 11 die Bewegung unter Nutzung von Algorithmen zur Musterklassifikation aus und bestimmt so ein Muster der die Aktivierungsgeste bildenden Bewegung.

In Schritt 21-2 durchsucht das Steuergerät 11 eine Datenbank mit vorab gespeicherten Vergleichsmustern und ordnet das zuvor bestimmte Muster einem der Vergleichsmuster zu.

In Schritt 21-3 wird ein dem Vergleichsmuster in der Datenbank zugeordneter Sichtbereich bestimmt. Ist das Side-View-System des Fahrzeugs 10 so ausgestaltet, dass beide Sichtbereiche 16-l und 16-r links und rechts des Fahrzeugs zugleich angezeigt werden, so können diese Bereiche 16-l, 16-r in der Datenbank als gemeinsamer Sichtbereich dem Vergleichsmuster zugeordnet sein. Ist hingegen eine nach Seiten getrennte Anzeige möglich, so können in der Datenbank zwei getrennte Einträge vorhanden sein. Die Vergleichsmuster dieser Einträge unterscheiden sich dann durch die Drehrichtung des Kopfes. Den Einträgen ist dann jeweils ausschließlich der entsprechende Sichtbereich 16-l (Drehrichtung links) bzw. 16-r (Drehrichtung rechts) zugeordnet.

Im vorliegenden Beispiel wird in Schritt 21-1 auch die Drehrichtung des Kopfes nach links als Teil des Musters bestimmt. In Schritt 21-3 wird folglich der dem Muster zugeordnete Sichtbereich 16-l bestimmt.

In Schritt wird 22-1 wird die den gewünschten Sichtbereich 16-l erfassende Fahrzeugkamera 15-l aktiviert. Schließlich wird in Schritt 22-2 das von der Kamera 15-l erfasste Bild des Sichtbereichs 16-l auf dem Head-up-Display 12 und / oder auf dem Mittendisplay 13 angezeigt.

Der Fahrer 2 hat somit durch eine völlig intuitive Handlung das Sichtunterstützungssystem 1 aktiviert und kann den gewünschten Sichtbereich 16-l mit dessen Hilfe mühelos einsehen.

### Bezugszeichenliste

- 1: Sichtunterstützungssystem
- 2: Fahrzeugführer
- 10: Kraftfahrzeug
- 11: Steuergerät
- 12: Head-up-Display
- 13: Mittendisplay
- 14: Innenraumkamera
- 15: Außenkamera
- 16: Sichtbereich
- 17: Datenbus
- 20-25: Verfahrensschritte

## Patentansprüche

1. Verfahren zur automatisierten Aktivierung eines Sichtunterstützungssystems (1) eines Fahrzeugs (10), insbesondere eines Kraftfahrzeugs (10), mit den Schritten
- Erfassen (20) einer durch eine Bewegung eines Kopfes und / oder Oberkörpers eines Fahrzeugnutzers (2), insbesondere eines Fahrzeugführers (2), gebildeten Aktivierungsgeste,
- Bestimmen (21) eines von dem Fahrzeugnutzer (2) gewünschten Sichtbereichs (16) anhand der erfassten Aktivierungsgeste und
- Aktivieren (22) eines den gewünschten Sichtbereich (16) abbildenden Teils des Sichtunterstützungssystems (1),
wobei der Schritt des Aktivierens (22) des den gewünschten Sichtbereich (16) abbildenden Teils des Sichtunterstützungssystems (1) umfasst
- Aktivieren (22-1) einer den gewünschten Sichtbereich (16) zumindest teilweise erfassenden Bilderfassungseinheit (15), insbesondere Fahrzeugkamera (15),
- Anzeigen (22-2) des von der Bilderfassungseinheit (15) erfassten Bildes auf einer Anzeigeeinheit (12, 13) des Fahrzeugs (10),
wobei der Schritt des Aktivierens (22) des den gewünschten Sichtbereich (16) abbildenden Teils des Sichtunterstützungssystems (1) in Abhängigkeit einer Zusatzbedingung, insbesondere eines Wertes eines Fahrzeugzustandsparameters, erfolgt,
**dadurch gekennzeichnet, dass**
die Aktivierungsgeste gebildet wird durch
a) eine seitliche Drehung des Kopfes in eine linke oder rechte Richtung und eine nach vorne gerichtete Bewegung des Oberkörpers, wobei ein Drehwinkel des Kopfes kleiner ist als ein erster vorbestimmter Drehwinkel, wobei der gewünschte Sichtbereich ein in der linken oder rechten Richtung von dem Fahrzeug gelegener Bereich ist, oder
b) eine seitliche Drehung des Kopfes und / oder des Oberkörpers in eine linke oder rechte Richtung, wobei ein Drehwinkel des Kopfes größer ist als ein zweiter vorbestimmter Drehwinkel, wobei der erste und der zweite vorbestimmte Drehwinkel bevorzugt gleich sind, wobei der gewünschte Sichtbereich ein in der linken oder rechten Richtung rückwärtig zu dem Fahrzeug gelegener Bereich ist, oder
c) eine Bewegung des Kopfes und / oder des Oberkörpers nach oben und in Richtung eines Rückspiegels, wobei der gewünschte Sichtbereich eine Rückbank des Fahrzeugs umfasst, oder
d) eine Bewegung des Kopfes und / oder des Oberkörpers nach unten und in Richtung einer Frontscheibe, wobei der gewünschte Sichtbereich ein vor dem Fahrzeug gelegener Bereich und insbesondere ein eine Lichtsignalanlage umfassender Bereich ist, oder
e) eine seitliche Bewegung des Kopfes und / oder des Oberkörpers, wobei der gewünschte Sichtbereich ein vor dem Fahrzeug gelegener Bereich ist,
wobei die Zusatzbedingung
a) eine Momentangeschwindigkeit unterhalb eines ersten vorbestimmten Schwellenwerts der Momentangeschwindigkeit oder
b) einen aktiven Zustand eines Fahrtrichtungsanzeigers des Fahrzeugs (10) oder
c) ein positives Belegungssignal eines Sitzbelegungserkennungssystems des Fahrzeugs (10) oder
d) eine Momentangeschwindigkeit unterhalb eines zweiten vorbestimmten Schwellenwerts der Momentangeschwindigkeit oder
e) einen Betrag eines Lenkwinkels oberhalb eines ersten vorbestimmten Schwellenwerts des Lenkwinkels
umfasst.

2. Verfahren nach Anspruch 1, wobei der Schritt des Bestimmens (21) des von dem Fahrzeugnutzer (2) gewünschten Sichtbereichs (16) anhand der erfassten Aktivierungsgeste umfasst
- Bestimmen (21-1) eines Musters der die Aktivierungsgeste bildenden Bewegung des Kopfes und / oder Oberkörpers,
- Zuordnen (21-2) des Musters zu einem in einer Datenbank vorab gespeicherten Vergleichsmuster und
- Bestimmen (21-3) eines dem Vergleichsmuster in der Datenbank zugeordneten Sichtbereichs (16).

3. Sichtunterstützungssystem (1) für ein Fahrzeug (10), insbesondere ein Kraftfahrzeug (10), welches zur Durchführung des Verfahrens nach einem der Ansprüche 1 bis 2 eingerichtet ist, aufweisend
- eine Erfassungseinheit (11, 14) zur Erfassung einer durch eine Bewegung eines Kopfes und / oder Oberkörpers eines Fahrzeugnutzers (2), insbesondere eines Fahrzeugführers (2), gebildeten Aktivierungsgeste,
- eine Bestimmungseinheit (11) zur Bestimmung eines von dem Fahrzeugnutzer (2) gewünschten Sichtbereichs (16) anhand der erfassten Aktivierungsgeste,
- eine Bilderfassungseinheit (15), insbesondere eine Fahrzeugkamera (15), zur zumindest teilweisen Erfassung des gewünschten Sichtbereichs (16) und
- eine Anzeigeeinheit (12, 13) zur Anzeige des von der Bilderfassungseinheit (15) erfassten Bildes.

4. Fahrzeug (10), insbesondere Kraftfahrzeug (10), mit einem Sichtunterstützungssystem (1) nach Anspruch 3.

## Claims

1. Method for the automated activation of a vision support system (1) of a vehicle (10), in particular of a motor vehicle (10), comprising the steps of
- detecting (20) an activation gesture formed by a movement of a head and/or upper body of a vehicle user (2), in particular of a vehicle driver (2),
- determining (21), on the basis of the detected activation gesture, a field of view (16) desired by the vehicle user (2), and
- activating (22) a part of the vision support system (1) which images the desired field of view (16),
wherein the step of activating (22) that part of the vision support system (1) which images the desired field of view (16) comprises
- activating (22-1) an image capture unit (15), in particular a vehicle camera (15), which at least partly captures the desired field of view (16),
- displaying (22-2) the image captured by the image capture unit (15) on a display unit (12, 13) of the vehicle (10),
wherein the step of activating (22) that part of the vision support system (1) which images the desired field of view (16) is carried out depending on an additional condition, in particular a value of a vehicle state parameter,
**characterized in that** the activation gesture is formed by
a) a lateral rotation of the head in a left or right direction and a forward directed movement of the upper body, wherein a rotation angle of the head is less than a first predetermined rotation angle, wherein the desired field of view is a region situated in the left or right direction of the vehicle, or
b) a lateral rotation of the head and/or of the upper body in a left or right direction, wherein a rotation angle of the head is greater than a second predetermined rotation angle, wherein the first and second predetermined rotation angles are preferably identical, wherein the desired field of view is a region situated in the left or right direction toward the rear of the vehicle, or
c) a movement of the head and/or of the upper body upward and in the direction of a rearview mirror, wherein the desired field of view comprises a back seat of the vehicle, or
d) a movement of the head and/or of the upper body downward and in the direction of a windscreen, wherein the desired field of view is a region situated in front of the vehicle and in particular a region comprising a light signal installation, or
e) a lateral movement of the head and/or of the upper body, wherein the desired field of view is a region situated in front of the vehicle,
wherein the additional condition comprises
a) an instantaneous speed below a first predetermined threshold value of the instantaneous speed or
b) an active state of a travel direction indicator of the vehicle (10) or
c) a positive occupancy signal of a seat occupancy recognition system of the vehicle (10) or
d) an instantaneous speed below a second predetermined threshold value of the instantaneous speed or
e) an absolute value of a steering angle above a first predetermined threshold value of the steering angle.

2. Method according to Claim 1, wherein the step of determining (21), on the basis of the detected activation gesture, the field of view (16) desired by the vehicle user (2) comprises
- determining (21-1) a pattern of the movement of the head and/or upper body forming the activation gesture,
- assigning (21-2) the pattern to a comparison pattern stored beforehand in a database, and
- determining (21-3) a field of view (16) assigned to the comparison pattern in the database.

3. Vision support system (1) for a vehicle (10), in particular a motor vehicle (10), which is configured for carrying out the method according to either of Claims 1 and 2, comprising
- a detection unit (11, 14) for detecting an activation gesture formed by a movement of a head and/or upper body of a vehicle user (2), in particular of a vehicle driver (2),
- a determining unit (11) for determining, on the basis of the detected activation gesture, a field of view (16) desired by the vehicle user (2),
- an image capture unit (15), in particular a vehicle camera (15), for at least partly capturing the desired field of view (16), and
- a display unit (12, 13) for displaying the image captured by the image capture unit (15).

4. Vehicle (10), in particular motor vehicle (10), comprising a vision support system (1) according to Claim 3.

## Revendications

1. Procédé d'activation automatisée d'un système d'aide à la vision (1) d'un véhicule (10), en particulier d'un véhicule automobile (10), ledit procédé comprenant les étapes suivantes
- détecter (20) un geste d'activation formé par un mouvement de la tête et/ou du haut du corps d'un utilisateur (2) du véhicule, notamment un conducteur (2) du véhicule,
- déterminer (21) une zone de vision (16) souhaitée par l'utilisateur (2) du véhicule en fonction du geste d'activation détecté et
- activer (22) une partie du système d'aide à la vision (1) qui représente la zone de vision souhaitée (16),
l'étape d'activation (22) de la partie du système d'aide à la vision (1) qui reproduit la zone de vision (16) souhaitée comprenant les étapes suivantes
- activer (22-1) une unité d'acquisition d'images (15), en particulier une caméra de véhicule (15), qui acquiert au moins partiellement la zone de vision (16) souhaitée,
- afficher (22-2) l'image acquise par l'unité d'acquisition d'images (15) sur une unité d'affichage (12, 13) du véhicule (10),
l'étape d'activation (22) de la partie du système d'aide à la vision (1) qui reproduit la zone de vision (16) souhaitée étant effectuée en fonction d'une condition supplémentaire, en particulier d'une valeur d'un paramètre d'état de véhicule,
**caractérisé en ce que**
le geste d'activation est formé par
a) une rotation latérale de la tête vers la gauche ou la droite et un mouvement vers l'avant du haut du corps, un angle de rotation de la tête étant inférieur à un premier angle de rotation prédéterminé, la zone de vision souhaitée étant une zone située à gauche ou à droite du véhicule, ou
b) une rotation latérale de la tête et/ou du haut du corps vers la gauche ou la droite, un angle de rotation de la tête étant supérieur à un deuxième angle de rotation prédéterminé, le premier et le deuxième angle de rotation prédéterminé étant de préférence identiques, la zone de vision souhaitée étant une zone située à gauche ou à droite à l'arrière du véhicule, ou
c) un mouvement de la tête et/ou du haut du corps vers le haut et vers un rétroviseur, la zone de vision souhaitée comprenant une banquette arrière du véhicule, ou
d) un mouvement de la tête et/ou du haut du corps vers le bas et vers un pare-brise, la zone de vision souhaité étant une zone située à l'avant du véhicule et notamment une zone comprenant un système de feux de circulation, ou
e) un mouvement latéral de la tête et/ou du haut du corps, la zone de vision souhaitée étant une zone située à l'avant du véhicule,
la condition supplémentaire comprenant
a) une vitesse instantanée inférieure à une première valeur seuil prédéterminée de la vitesse instantanée ou
b) un état actif d'un indicateur de direction du véhicule (10) ou
c) un signal d'occupation positif provenant d'un système de détection d'occupation de siège du véhicule (10) ou
d) une vitesse instantanée inférieure à une deuxième valeur seuil prédéterminée de la vitesse instantanée ou
e) une valeur absolue d'angle de braquage supérieure à une première valeur seuil prédéterminée de l'angle de braquage.

2. Procédé selon la revendication 1, l'étape de détermination (21) de la zone de vision (16) souhaitée par l'utilisateur (2) du véhicule en fonction du geste d'activation détecté comprenant les étapes suivantes
- déterminer (21-1) un modèle de mouvement de la tête et/ou du haut du corps qui forme le geste d'activation,
- associer (21-2) le modèle à un motif de comparaison préalablement mémorisé dans une base de données et
- déterminer (21-3) une zone de vision (16) associée au modèle de comparaison dans la base de données.

3. Système d'aide à la vision (1) destiné à un véhicule (10), notamment un véhicule automobile (10), lequel système est conçu pour mettre en œuvre le procédé selon l'une des revendications 1 à 2 et comporte
- une unité de détection (11, 14) destinée à détecter un geste d'activation formé par un mouvement d'une tête et/ou d'un haut du corps d'un utilisateur (2) du véhicule, notamment d'un conducteur (2) du véhicule,
- une unité de détermination (11) destinée à déterminer une zone de vision (16) souhaitée par l'utilisateur du véhicule (2) sur la base du geste d'activation détecté,
- une unité d'acquisition d'images (15), en particulier une caméra de véhicule (15), destinée à acquérir au moins partiellement la zone de vision (16) souhaitée et
- une unité d'affichage (12, 13) destinée à afficher l'image acquise par l'unité d'acquisition d'images (15) .

4. Véhicule (10), notamment véhicule automobile (10), pourvu d'un système d'aide à la vision (1) selon la revendication 3.
